# EUROPÄISCHE PATENTSCHRIFT

(11) **EP 1 119 836 B1**
(45) Veröffentlichungstag und Bekanntmachung des Hinweises auf die Patenterteilung: **22.01.2003**
(21) Anmeldenummer: 98950036.8
(22) Anmeldetag: 15.09.1998
(51) Int. Cl.: G08B 25/10, G01S 5/00

(54) **SCHUTZ- UND ÜBERWACHUNGSSYSTEM, INSBESONDERE FÜR HILFE- ODER SCHUTZBEDÜRFTIGE PERSONEN**
PROTECTION AND SURVEILLANCE SYSTEM, ESPECIALLY FOR PERSONS REQUIRING ASSISTANCE OR PROTECTION
SYSTEME DE PROTECTION ET DE SURVEILLANCE, EN PARTICULIER POUR PERSONNES NECESSITANT UNE AIDE OU UNE PROTECTION

(43) Veröffentlichungstag der Anmeldung: 01.08.2001
(73) Patentinhaber: Hahmann Hub, Karin, 97437 Hassfurt (DE); Hub, Steffen, 97437 Hassfurt (DE)
(72) Erfinder: Hahmann Hub, Karin, 97437 Hassfurt (DE); Hub, Steffen, 97437 Hassfurt (DE)
(74) Vertreter: Kuhnen & Wacker
(86) Internationale Anmeldenummer: EP9805853
(87) Internationale Veröffentlichungsnummer: WO00016288

(56) Entgegenhaltungen:
- EP-A- 0 545 636
- EP-A- 0 809 117
- EP-A- 0 816 862
- WO-A-95/00860
- WO-A-96/13022

## Beschreibung

Die Erfindung betrifft ein Schutz- und Überwachungssystem, insbesondere für hilfe- oder schutzbedürftigen Personen, mit einem von der Person mitgeführten Signalgeber, mit einem dessen Signale weiterleitenden Signalübertragungsnetz und mit einer mit diesem Netz verbundenen Zentrale, in welcher die Signale des Signalgebers zur Identifizierung der Person analysierbar sind. Es sind Notrufsysteme bekannt, in denen ein Signal zur Herstellung einer Fernssprechverbindung von einer hilfesuchenden Person an eine Empfangsstation gesendet werden kann. Oft haben bei Systemen dieser Art die der hilfesuchenden Person zugeordneten Sender eine ortsfeste Aufstellung, etwa in Gestalt eines Polizeirufs in einer Telefonzelle, oder der Sender hat bei bekannten Systemen einen Aufbau, der ein ständiges Mitführen durch eine hilfesuchende Person erschwert.

Bekannt sind auch Notrufsysteme mit sogenannten Notrufpiepsem, die ein Funksignal aussenden, das von einem am erwarteten Aufenthaltsort der hilfesuchenden Person aufgestellten Empfänger aufgenommen und in ein über ein Telefon-Festnetz an eine Zentrale übermitteltes, der hilfesuchenden Person zugeordnetes Anrufsignal umgeformt wird.

Bei diesen Systemen bekannter Art wird jedoch davon ausgegangen, daß die hilfe- oder schutzbedürftige Person einen begrenzten Bereich nicht verläßt, in welchem das Funksignal des Notrufpiepsers vom ortsfest aufgestellten Empfänger noch empfangen werden kann. Eine genaue Ortung der hilfe- oder schutzbedürftigen Person ist bei dem bekannten System nicht möglich.

Die EPA-0809117 beschreibt ein Schutz- und Überwachungssystem der eingangs definierten Art, wobei der von der hilfe- oder schutzbedürftigen Person mitgeführte Signalgeber einen Sender zur Abgabe eines Mobilfunknetz-Suchsignales, eines entsprechenden Anwahlsignales der Zentrale und zur Abgabe von Personen-Identifizierungssignalen enthält und außerdem einem GPS-Ortungssystem zugeordnet ist, und in der Zentrale für eine Abfrage Personen-Identifiezierungsdaten entsprechend den Personen-Identifizierungssignalen und Ortungsdaten entsprechend der Auswertung von GPS-Ortungssignalen gebildet und bereitgehalten werden.

Ähnliche Schutz- und Überwachungssysteme sind auch in der WO9500860A und der WO9613022A beschrieben.

Durch die Erfindung soll die Aufgabe gelöst werden, ein Schutz- und Überwachungssystem der eingangs definierten Art so auszubilden, daß es für vielfältige Hilfe- und Schutzmaßnahmen und eine vergleichsweise präzise Ortung der betreffenden hilfe- oder schutzbedürftigen Person im Notfalle verbessert geeignet ist.

Diese Aufgabe wird erfindungsgemäß durch die Merkmale von Anspruch 1 gelöst.

Gemäß einer Ausführungsform des hier angegebenen Systems besteht die Zuordnung des GPS-Ortungssystems zum Signalgeber darin, daß über die Antenne des Signalgebers außer den Mobilfunknetz-Suchsignalen, welche sich in dem den betreffenden Mobilfunknetzen zugeordneten Frequenzbereich befinden, auch GPS-Sendesignale zu Satelliten hin ausgesendet werden, wobei diese GPS-Sendesignale des am Orte der hilfe- oder schutzbedürftigen Person befindlichen Signalgebers nicht nur reine Entfernungsmeßimpulse üblicher Art sind, sondern zusätzlich eine die Person identifizierende Modulation aufweisen.

Diese GPS-Signale werden am Orte der GPS-Satelliten durch eine jeweilige Entfernungsinformation ergänzt und dann zu einer am Orte der Zentrale befindlichen Empfangsstation reflektiert. In der Empfangsstation ist auf Grund der Personen identifizierenden, hinzugefügten Daten eine Gruppenbildung der zum selben Signalgeber, also zur selben hilfe- oder schutzbedürftigen Person gehörigen Entfernungsinformationen möglich, derart, daß in der Zentrale durch Auswertung solcher Signalgruppen Ortungsinformationen, die den einzelnen Personen zugeordnet sind, gewonnen werden können und aufgrund der Personenidentifikation in der Zentrale autorisiert abrufbar bereit gehalten werden.

Diese Ausgestaltung des hier vorgeschlagenen Systems entlastet den von der hilfe- oder schutzbedürftigen Person mitgeführten Signalgeber von dem Aufwand für die üblichen GPS-Auswerteinrichtungen, welche in diesem Falle am Orte der Zentrale vorgesehen werden können. Voraussetzung aber ist ein Signalgeber ausreichender Leistung zur Aussendung der mit personenidentifizierenden Modulationen versehenen GPS-Sendesignale zum Empfang und zur Weitergabe durch die Satelliten.

Gemäß einer anderen Ausführungsform ist am Orte der hilfe- oder schutzbedürftigen Person dem Signalgeber ein Empfänger zum Empfang von GPS-Satellitensignalen zugeordnet und der Sender des Signalgebers sendet auch von den GPS-Satellitensignalen abgeleitete Entfernungssignale zur Positionsauswertung in der Zentrale, oder aus den GPS-Satellitensignalen am Ort des Signalgebers in einer Auswerteinrichtung gebildete Positionsdaten, an das Mobilfunknetz zur Übertragung zur Zentrale. Beide Ausführungen ermöglichen eine recht genaue Ortung der betreffenden Person innerhalb eines weiten Bereiches, ohne daß von der Person selbst Handlungen vorzunehmen sind. Das Ortungsergebnis oder Peilergebnis ist dann in der Zentrale verfügbar, ist aber nicht allgemein, sondern nur für eine autorisierte Organisation oder Person zugänglich.

Im übrigen bilden zweckmäßige Ausgestaltungen und Weiterbildungen des hier angegebenen Schutz- und Überwachungssystems Gegenstand der dem Patentanspruch 1 nachgeordneten Ansprüche, deren Inhalt hierdurch ausdrücklich zum Bestandteil der Beschreibung gemacht wird, ohne an dieser Stelle den Wortlaut zu wiederholen.

Nachfolgend werden einige Ausführungsformen unter Bezugnahme auf die Zeichnungen näher erläutert. Es stellen dar:
Fig. 1 eine schematische räumliche Abbildung eines Schutz- und Überwachungssystems der hier angegebenen Art gemäß einer ersten Ausführungsform,
Fig. 2 ein vereinfachtes Blockschaltbild eines von einer hilfe- oder schutzbedürftigen Person mitgeführten Signalgebers für das System nach Fig.1,
Fig. 3 ein vereinfachtes Blockschaltbild eines am Orte des Signalgebers für bestimmte Funktionen installierten Empfängers für das System nach Fig. 1,
Fig. 4 eine schematische, räumliche Abbildung eines Schutz- und Überwachungssystems der hier angegebenen Art gemäß einer weiteren Ausführungsform, und
Fig. 5 eines von einer hilfe- oder schutzbedürftigen Person mitgeführten Signalgebers für das System nach Fig. 4.

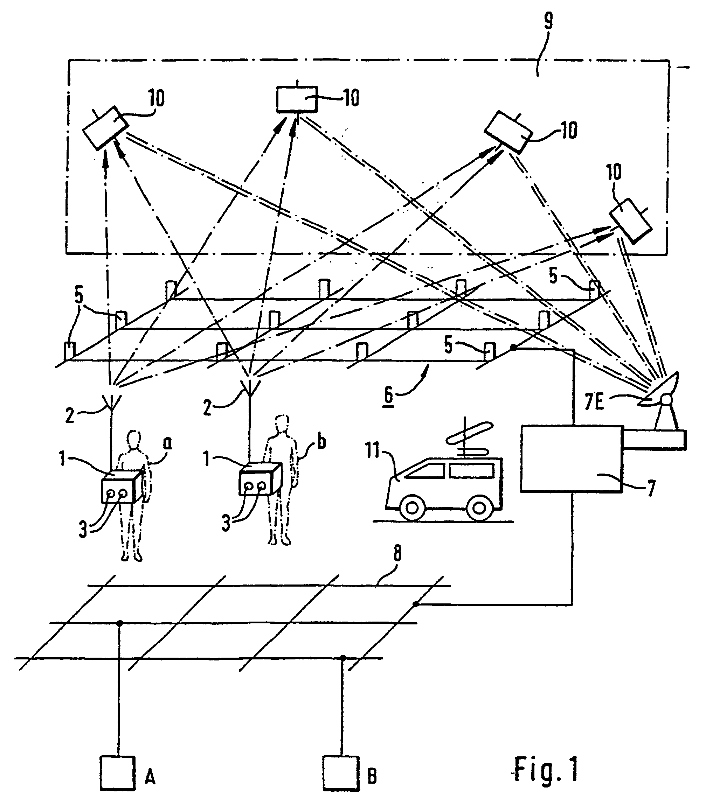

In Fig. 1 ist eine erste hilfe- oder schutzbedürftige Person mit a und eine zweite hilfs- oder schutzbedürftige Person mit b bezeichnet. Fernsprechanschlüsse, gemäß einer Abwandlung auch Mobilfunkeinheiten, welche im Einflußbereich von für die Personen a und b verantwortlichen Personen oder Organisationen stehen, sind mit A und B bezeichnet. Die hilfs- oder schutzbedürftigen Personen a und b führen als Teil einer Halskette oder als Teil eines Armreifs oder als Teil einer Fußmanschette oder als Teil eines Gürtels, ferner getarnt als Nachbildung einer Puderdose oder eines Lippenstifts oder eines Zigarettenetuis oder dergleichen, einen Signalgeber 1 mit sich. Dieser Signalgeber ist bevorzugtermaßen in einem widerstandsfähigen, unauffälligen Gehäuse untergebracht. Es sind jedoch auch Ausführungsformen denkbar, bei denen das Gehäuse besonders auffällig gestaltet ist, um Personen, die einen Angriff gleich welcher Art gegen die betreffende hilfs- und schutzbedürftige Person zu führen beabsichtigen, abzuschrecken. Einzelheiten diesbezüglich werden weiter unten behandelt.

Jeder Signalgeber 1 ist mit einer Antenne 2 ausgestattet, wobei durch die Darstellung von Fig. 1 nicht zum Ausdruck gebracht werden soll, daß die Antenne 2 notwendigerweise deutlich sichtbar im Abstand von Körper der betreffenden Person a oder b aufragt. Vielmehr kann die Antenne 2 entweder im Gehäuse des Signalgebers 1 untergebracht sein, wenn dieses aus wellendurchlässigem Werkstoff gebaut ist, oder die Antenne 2 kann über unter der Kleidung verborgene Leitungen mit dem Signalgeber 1 verbunden sein oder selbst von solchen Leitungen gebildet sein. Denkbar ist die Unterbringung der Antenne 2 in einem Haarreif, in einer Halskette, in Kleidernähten, in Spulen, welche in das Schuhwerk eingebettet sind und dergleichen mehr.

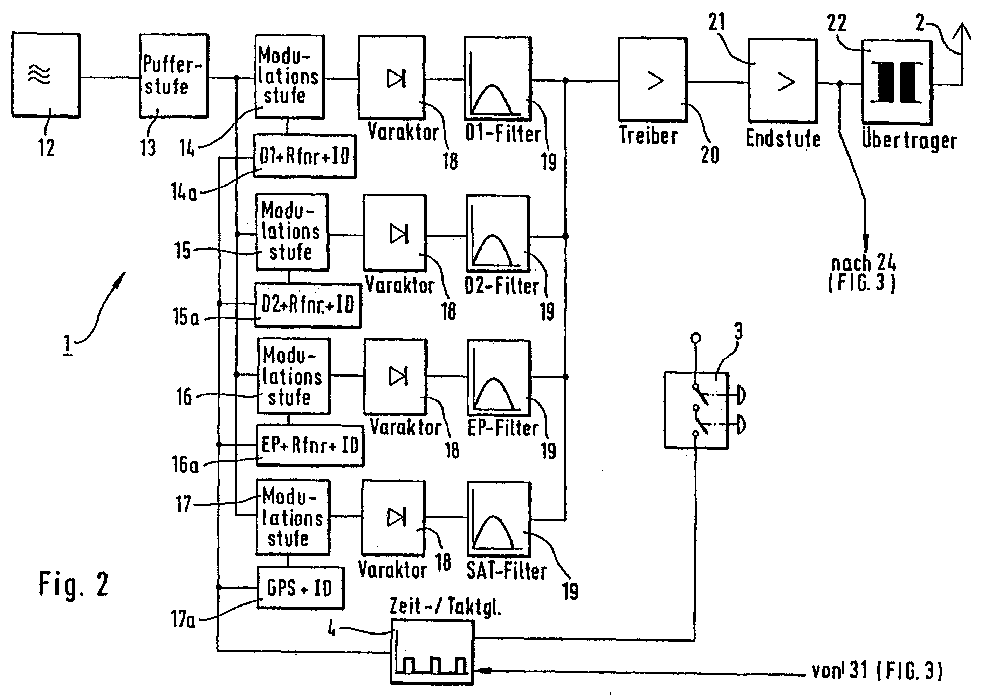

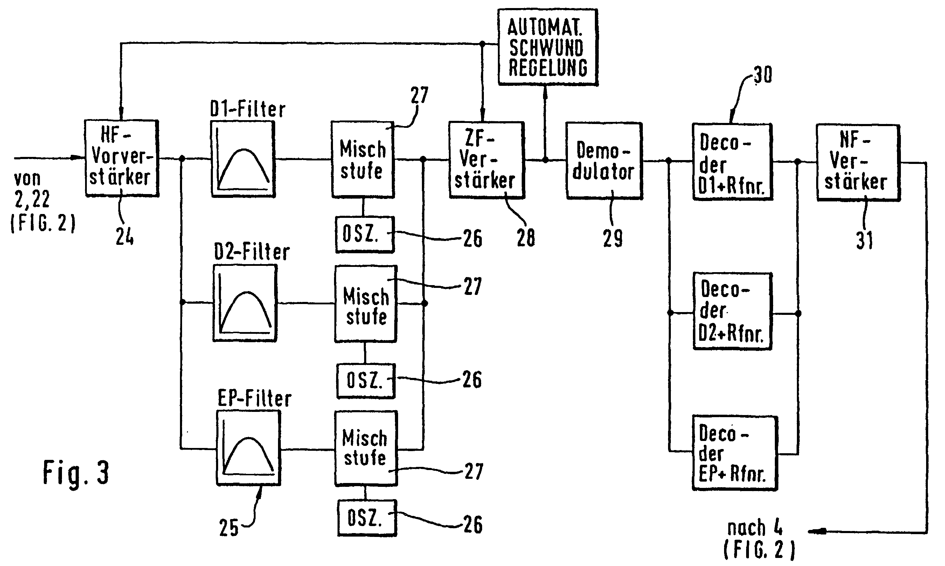

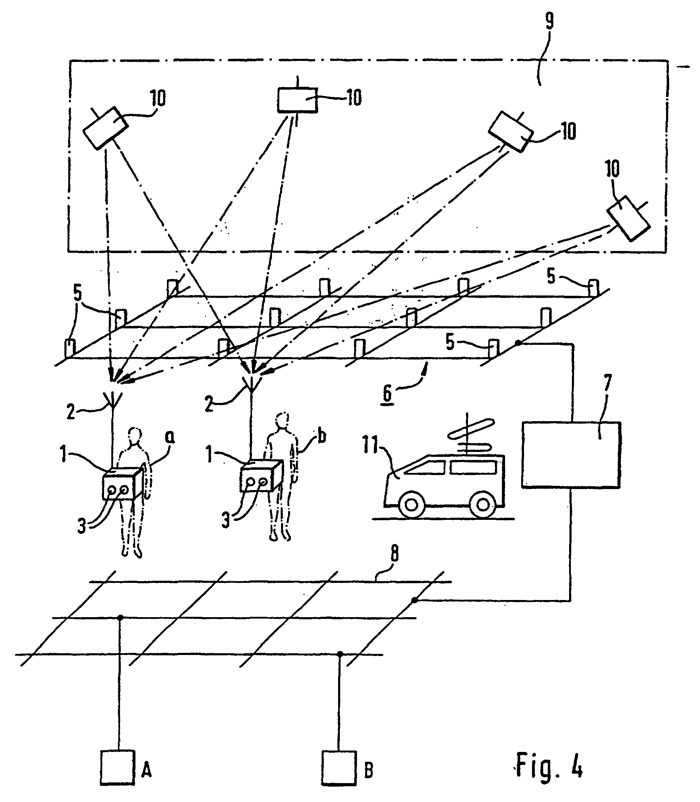

Der Signalgeber 1 enthält in der in Fig. 1 gezeigten Ausführungsform jeweils ein Schalterpaar 3. Bei gleichzeitiger Betätigung der Schalter des Schalterpaares 3 wird in dem Signalgeber 1 ein Taktgeber 4 (siehe Fig. 2) ausgelöst, der entweder für eine vorbestimmte Zeitdauer oder für eine zunächst unbegrenzte Zeitdauer die Funktionen des Signalgebers für bestimmte Takt-Zeitintervalle auslöst. Zur Vermeidung von Fehlbetätigungen sind die Handhaben des Schalterpaares 3 in einer Anordnung an dem Signalgeber 1 oder an einem gesonderten Tastenkörper vorgesehen, welche eine unbeabsichtigte Betätigung der eine UND-Funktion verwirklichenden Schalter des Schalterpaares ausschließt.

Sobald die Schaltkreise des Signalgebers 1 in Tätigkeit gesetzt sind, sendet der Signalgeber über die Antenne 2 nach der Art einer Mobilfunkeinheit ein Mobilfunknetz-Suchsignal aus , das von mindestens einer der Basisstationen 5 eines Mobilfunknetzes 6 empfangen wird. Außer der Aussendung des Suchsignales erfolgt vom Signalgeber 1 aus auch die Aussendung eines Anwahlsignales einer Zentrale 7 sowie die Aussendung eines Personen-Identifizierungssignales, was in einem normalen Mobilfunknetz der Rückrufnummer des Inhabers einer Mobilfunkeinheit entspricht.

In der Zentrale 7 werden in einem Speicher an einer Adresse, welche dem betreffenden Personen-Identifizierungssignal zugeordnet ist, Daten gespeichert, welche von einem GPS-Ortungssystem abgeleitet sind, worauf nachfolgend eingegangen wird.

Die einerseits mit dem Mobilfunknetz 6 drahtlos oder über eine Verdrahtung verbundene Zentrale 7 des hier angegebenen Systems steht außerdem mit einem Festnetz, also beispielsweise einem normalen Telefonnetz 8 in Verbindung, an welches die Teilnehmereinheiten A und B in der aus Figur 1 ersichtlichen Weise angeschlossen sind. Durch entsprechende Anrufnummernzuteilung ist es für den Teilnehmeranschluß A ausschließlich möglich, den Speicherungsinhalt im Speicher der Zentrale 7 abzufragen, der sich auf die hilfe- und schutzbedürftige Person a bezieht, während für den Teilnehmeranschluß B nur möglich ist, den Speicherungsinhalt des Speichers in der Zentrale 7 für die hilfe- oder schutzbedürftige Person b abzufragen.

Bei dem in Figur 1 gezeigten Ausführungsbeispiel senden aber die Signalgeber 1 bei jeweils durch Betätigung durch die Schalterpaare 3 ausgelöstem Takt-Zeitintervallbetrieb, nicht nur Mobilfunknetz-Suchsignale, Anwahlsignale der Zentrale 7 und Personen-Identifizierungssignale aus, sondern die jeweils taktweise in Betrieb gesetzte Signalgebereinheit 1 sendet zusätzlich GPS-Ortungsmeldesignale zu Satelliten 10 eines Satellitensystems 9 hin aus.

In Figur 1 ist ein Satellitensystem 9 mit vier im Sichtbereich der Antenne 2 eines Signalgebers 1 gelegenen Satelliten 10 eingezeichnet.

Abweichend von üblichen GPS-Ortungssystemen ist bei dem hier angegebenen Schutz- und Überwachungssystem vorgesehen, daß am Orte des Signalgebers 1 über die Antenne 2 GPS-Ortungsmeldesignale ausreichender Leistung und passender Frequenz ausgesendet und von den Satelliten 10 empfangen werden. Die Satelliten 10 wirken als Relaisstationen, welche die von den Signalgebern 1 empfangenen Signale verstärkt zu einer am Orte der Zentrale 7 aufgestellten Empfangsantenne 7 E übermitteln. Diese von den Signalgebern 1 ausgehenden, über die Satelliten 10 geleiteten GPS-Ortungsmeldesignale enthalten in Analogie zu der üblichen GPS-Ortungsfunktion jeweils Entfernungsinformationen der Entfernungen zwischen dem einzelnen Signalgeber 1 und den dessen GPS-Ortungsmeldesignale empfangenden Satelliten 10. Aus den Entfernungsinformationen werden am Orte der Zentrale 7 die Positionen der einzelnen Signalgeber 1 errechnet und den Personen-Identifizierungsinformationen zugeordnet. Dieses ist aber nur deshalb möglich, weil die einzelnen GPS-Ortungssignale, welche von dem einen oder anderen oder dritten Signalgeber 1 ausgehen, eine Modulation oder einen zusätzlichen Code enthalten, der die betreffende hilfe- oder schutzbedürftige Person a oder b identifiziert. Die Personen-Identifizierungsinformation dient also zum einen bei der Auswertung der von den einzelnen Satelliten 10 zu der Zentrale 7 übermittelten Entfernungsmeßinformationen der Zuordnung dieser Informationen zu einer bestimmten Person angehörigen Gruppen und zum anderen zur Zuordnung des Auswertergebnisses zu dieser betreffenden Person a, b usw., bzw. zur Einordnung der Ortungsinformation an dem der Person zugeordneten Speicherplatz.

Die beschriebene Ausführungsform ermöglicht es, den Signalgeber 1, welche von der hilfe- oder schutzbedürftigen Person mitzuführen ist, von GPS-Empfangseinrichtungen und GPS-Auswerteinrichtungen freizuhalten und damit zu einer Miniaturisierung beizutragen.

Es sei allerdings nicht unerwähnt, daß für die Aussendung sowohl von Mobilfunknetz-Suchsignalen als auch von GPS-Onungsmeldesignalen in den Signalübertragungskanälen sehr breitbandige Bauelemente vorgesehen werden müssen, da die Aussendung der Mobilfunknetz-Suchsignale im allgemeinen im Megahertzbereich unter 1 GHz erfolgt und die GPS-Ortungsmeldesignale, welche bei dem hier vorgeschlagenen System eine personenidentifizierende Kodierung haben müssen, im Bereich von etlichen GHz erfolgt.

Sollte die Verfügbarkeit ausreichend breitbandiger Ausgangsstufen im Sendekanal für die Mobilfunknetz-Suchsignale und für die GPS-Ortungsmeldesignale Schwierigkeiten bereiten, so können Ausgangskanäle mit jeweils getrennten Sendeantennen am Orte der Signalgeber 1 vorgesehen werden.

In an sich bekannter Weise erlaubt der Empfang von vier GPS-Satellitensignalen bei bekannter Satellitenposition die Auswertung von drei aus Laufzeitmessungen abgeleiteten Entfernungsmessungen unter Durchführung einer Zeitsynchronisation mit am Orte der Satellitensender vorgesehenen Zeitnormalen.

Bei dem hier angegebenen Schutz- und Überwachungssystem kann die Anordnung so getroffen sein, daß entweder am Ort des jeweiligen Signalgebers 1 die GPS-Satellitensignale ausgewertet und dann die erhaltenen Positionsdaten zur Zentrale 7 hin ausgesendet werden, oder daß Zwischenprodukte der Auswertung am Orte des Signalgebers gebildet werden und diese Zwischenprodukte zur Endauswertung und damit zur Bildung der Positionsdaten für den betreffenden Signalgeber 1 zur Zentrale 7 übertragen werden, wo jeweils etwa im Multiplexverfahren, diese Endauswertung für jeden Signalgeber 1 individuell durchgeführt wird.

Sollte es sich als praktisch erweisen, daß die Feinortung aufgrund der GPS-Satellitensignale für bestimmte Fälle nicht ausreicht, so kann zusätzlich auf ein unter bestimmten Bedingungen ausgelöstes Alarmsignal hin eine Peilung beispielsweise mittels mobilen Funkmeßeinheiten in an sich bekannter Weise durchgeführt werden, beispielsweise dann, wenn die Position der hilfe- oder schutzbedürftigen Person in einem Gebäude (Dach, 15ter Stock, zweites Kellergeschoß) ausgemacht werden soll. In Figur 1 ist schematisch ein Funkmeßwagen bei 11 eingezeichnet. Es ist aber auch möglich, am Orte der Basisstationen 5 des Mobilfunknetzes 6 Peilempfänger zu installieren, wobei diese Peilempfänger in Dreiergruppen automatisch ausgelöst werden können, wenn sich aufgrund der zuvor durch das GPS-System festgestellten Position der betreffende Signalgeber 1 im Bereich einer Basisstation 5 befindet, die einer solchen Dreiergruppe angehört. Gegenstand der Peilung durch die Funkmeßwagen oder andere Peilgeräte sind die Mobilfunknetz-Suchsignale und/oder die GPS-Ortungsmeldesignale der einzelnen Signalgeber 1.
Es versteht sich, daß mobile Peilfunkempfänger zur Feinstortung des Signalgebers 1 oder automatisch in Betrieb gesetzte stationäre Peilempfänger am Orte der Basisstationen 5 des Mobilfunknetzes 6 auch auf dasjenige Signal der einzelnen Signalgeber 1 ansprechen können, das ein GPS-Ortungsmeldesignal ist.

Bezüglich der Betriebsweise des in Figur 1 schematisch dargestellten Systems ist weiterhin zu sagen, daß mittels des Schalterpaares 3 entweder eine allgemeine In- betriebsetzung des zugehörigen Signalgebers 1 zur taktweisen Signalabgabe erfolgt, oder die Betätigung des Schalterpaares 3 stellt einen akuten Notruf dar, welcher dann nach erstmaligem Vorliegen von GPS-Ortungsdaten in der Zentrale 7 einen Alarm auslöst, der beispielsweise zu einer Polizeistation oder zu mehreren Polizeistationen weiter übertragen wird.

Eine andere Variation des Betriebes eines Systems der allgemein in Figur 1 dargestelltes Art besteht darin, GPS-Ortungsdaten von der Zentrale 7 aus individuell an den Anschluß A oder B automatisch weiter zu übertragen, so daß an dem Anschluß A fortwährend bekannt ist, wo sich die Person a befindet, und an dem Anschluß B fortwährend verfolgbar ist, wo sich die Person b befindet.

Eine Alarmauslösung läßt sich bei dieser und bei der zuvor beschriebenen Ausführungsform auch dann vornehmen, wenn sich während des Aktualisierens der jeweils gespeicherten Positionsdaten durch einen Vergleich der Positionsdaten aus unterschiedlichen Takt-Zeitintervallen ergibt, daß eine ungewöhnlich rasche Positionsänderung eingetreten ist, oder daß die hilfe- oder schutzbedürftige Person sich aus einem vorgegebenen Bereich entfernt hat.
Gemäß einer Abwandlung kann anstelle des Schalterpaares 3 in dem Signalgebern 1 auch eine ferngesteuerte Schalteinrichtung vorgesehen sein, welche es ermöglicht, die Signalaussendung der Signalgeber 1 über die Antennen 2 auf ein entsprechendes, beispielsweise über die Zentrale 7 und das Mobilfunknetz 6 ausgegebenes Fernsteuersignal hin einzuschalten. Auch ein kurzzeitiges Einschalten und Ausschalten auf diese Weise kann in Betracht gezogen werden, beispielsweise dann, wenn zu befürchten ist, daß eine hilfe- oder schutzbedürftige Person in unerwünschter Weise aufgrund ausgesendeter Signale der Signalgeber 1 von Dritten dann geortet werden kann, wenn über längere Zeitdauer hin Suchsignale oder GPS-Ortungsmeldesignale oder GPS-Ergebnissignale von der jeweiligen Antenne ausgestrahlt werden.

Figur 2 zeigt in stark vereinfachter Form eine mögliche Ausbildung eines Signalgebers 1. Dieser enthält einen Hochfrequenzoszillator 12 und eine ihm nachgeschaltete Pufferstufe 13 zum Schutz des Oszillators 12 vor Rückwirkungen aus den nachgfolgenden Schaltungsteilen. Das Ausgangssignal der Pufferstufe 13 gelangt zu einer Reihe von Modulationsstufen 14 bis 17. In den Modulationsstufen 14 bis 17 wird auf das von der Pufferstufe 13 gelieferte Trägersignal durch Phasenmodulation ein Mobilfunknetz-Suchsignal beispielsweise für die Mobilfunknetze D1, D2 und E-plus zusätzlich zu einem Personenidentifizierungscode und schließlich in dem Phasen- Modulator 17 ein GPS-Ortungsmeldesignal, ebenfalls mit einem Personenidentifizierungscode versehen, aufmoduliert. Die Mobilfunknetz-Suchsignale jeweils zuzüglich der Rufnummer für die Zentrale 7 und dem Personenidentifizierungscode, werden aus Eprom-Speichern abgelesen. Entsprechendes gilt für die den GPS-Ortnungsmeldesignalen beizugebenden Personenidentifizierungsinformationen. Das Aufmodulieren auf den Träger in den Modulationsstufen 14 bis 17 erfolgt in einem von dem Taktgeber 4 vorgegebenen Zeittakt nacheinander wobei diesbezügliche Einzelheiten in Figur 2 zur Vereinfachung der Darstellung weggelassen sind. Die für die Bildung der Mobilfunknetz-Suchsignale und Anrufsignale bzw. der EPS-Ortungsmeldesignale verwendeten Eprom-Speicher sind in Figur 2 mit 14a, 15a, 16a und 17a bezeichnet.

Die Modulationsergebnisse vom Ausgang der Modulationsstufen 14 bis 17 erfahren jeweils eine Frequenzvervielfachung durch einen Vervielfachungs-Varaktor 18 wobei die Frequenzvervielfachung der Signalumsetzung in einen dem betreffenden Mobilfunknetz zugeordneten Frequenzbereich bzw. in den Frequenzbereich der GPS-Ortungsmeldesignale entspricht. Nachfolgend wird in jedem Kanal eine Filterung durchgeführt. Die Varaktor-Vervielfacher und die Filter sind, wenngleich in den Kanälen nicht zueinander identisch, einheitlich mit 18 beziehungsweise 19 bezeichnet.

Die Ausgänge der Filter 19 werden durch eine Treiberstufe 20 und eine Endstufe 21 verstärkt und über einen Übertrager 22 geleitet, um von der Antenne 2 ausgesendet zu werden.

Soll eine für die hilfs- oder schutzbedürftige Person a oder b verantwortliche Person oder Organisation die Möglichkeit haben, allein den Signalgeber 1 der ihr schutzbefohlenen Person anzuwählen, so geschieht dies bei der Ausführungsform nach Figur 1 in ganz entsprechender Weise wie etwa ein Telefonanruf von einer Mobilfunkeinheit oder von einem Festanschluß aus über ein Mobilfunknetz oder über ein Festnetz an den Inhaber einer Mobilfunkeinheit, hier also an den Träger des betreffenden Signalgebers 1 unter Verwendung der zugeordneten Personen-Identifizierungssignale. Am Orte des Signalgebers 1 ist dann eine der Senderschaltung nach Figur 2 entsprechende Empfängerschaltung vorgesehen. Sie enthält einen Hochfrequenz-Vorverstärker, eine Filterbank 25 entsprechend den in Betracht kommenden Frequenzbereichen der jeweiligen Mobilfunknetze, eine Gruppe von Mischstufen 27 und mit diesen jeweils gekoppelten, quarzgesteuerten, ggf. einstellbaren Oszillatoren 26 sowie einen nachgeschalteten Zwischenfrequenzverstärker 28, welcher die Zwischenfrequenz-Ausgangssignale der Mischstufen 27 verstärkt.

Nach einer Demodulation in Demodulator 29 wird die jeweilige Anrufnummer in einer Decodierergruppe 30 entschlüsselt, was schließlich zur Erzeugung eines im Verstärker 31 verstärkten niederfrequenten Schaltsignal führt, das dem Taktgeber 4 der Signalgebereinheit 1 zu dessen Fernbedienung zugeführt werden kann.

Das hier angegebene System gestattet ohne die Gefahr einer Überlastung die Überwachung einer Vielzahl von hilfe- und schutzbedürftigen Personen und die Abfrage der jeweiligen Aufenthaltsorte bei präziser Ortung und unter Trennung der einzelnen Ortung- und Überwachungsvorgänge.

Es ist also festzustellen, daß gemäß der einfachsten prinzipiellen Ausführungsform die Signalgeber 1 der hilfs- oder schutzbedürftigen Personen a und b zu einem Teil Elemente einer Mobilfunkeinheit in einer stark vereinfachten Form aufweisen, die nur den Netzsuch- und Anrufmodus zur Zentrale 7 hin durchführten, wobei dieser Betriebsmodus entweder kontinuierlich abläuft oder durch Betätigung des Schalterpaares am Orte des Signalgebers 1 vom Betätigungszeitpunkt ab kontinuierlich abläuft, oder aber durch Fernbetätigung von Schalteinrichtungen ausgelöst wird. Kontinuierlich bedeutet in diesem Zusammenhang, wie sich aus den obigen Ausführungen ergibt, auch einen Taktbetrieb. Die Zentrale 7 bildet und speichert Ortungsdaten und Personen-Identifizierungsdaten in Speichereinrichtungen individuell, wobei diese Daten über ein Mobilfunknetz oder beispielsweise ein Festnetz 8 von den jeweils autorisierten Personen oder Organisationen über die Anschlüsse A oder B individuell abgerufen werden können.

Die Auswertung der GPS-Ortungsdaten, insbesondere von Takt-Zeitintervall zu Takt-Zeitintervall, kann eine Alarmauslösung bewirken, welche zu Polizeistationen übertragen wird, um die Aussendung von mobilen Peilempfängern 11 zur Einsammlung von Ortungs-Feinstdaten ( auch Höheninformationen) zu bewirken. Anstelle des Ausschickens von mobilen Peilempfängern kann auch die Auslösung von stationären Peilempfängern am Orte der Basisstationen des Mobilfunknetzes 6 erfolgen.

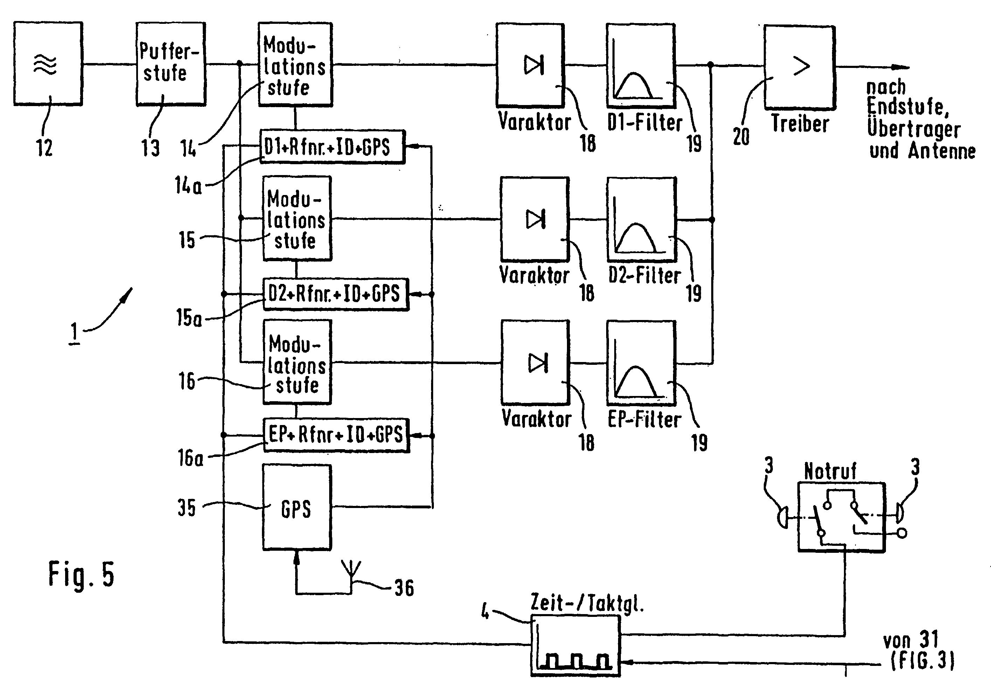

Nur dann, wenn beabsichtigt ist, durch Schalteinrichtungen nach der Art des Schalterpaares 3 oder durch andere Schalteinrichtungen den Signalgeber 1 fernzubetätigen, bedarf es in den Signalgebern 1 nach Art einer Mobilfunkeinheit auch vollständiger Empfangseinrichtungen, wie sie anhand von Figur 3 vorstehend erläutert wurden. Diese Empfangseinrichtungen werden entweder automatisch von der Zentrale 7 aus, oder von den für die autorisierten Personen oder Organisationen vorgesehenen Anschlüssen A oder B aus, angewählt und können den Betrieb der Signalgeber 1 dann im Sinne der obigen Darlegungen auslösen oder wieder beenden.

Es sei hier auf einige Besonderheiten der am Ort des Signalgebers 1 befindlichen Senderschaltung 1 nach Figur 2 und der ebenfalls am Orte des Signalgebers 1 befindlichen Empfängerschaltung nach Figur 3 eingegangen. Aus Figur 2 ist ersichtlich, daß der Endstufe 21 ein Übertrager 22 nachgeschaltet ist, der die Sende- und Empfangsantenne 2 speist. Die Empfängerschaltung nach Figur 3 besitzt keine eigene Empfangsantenne, sondern benützt die Sende- und Empfangsantenne 2, wobei allerdings der Hochfrequenz-Vorverstärker 24 von einem Abzweig zwischen der Endstufe 21 und dem Übertrager 22 aus gespeist wird.

Außerdem enthält die Empfängerschaltung nach Figur 3 eine automatische Schwundregelung, welche während der Aussendung von Signalen über die Antenne 2 den Hochfrequenz-Vorverstärker 24 und den Zwischenfrequenz-Verstärker 28 herunterregelt, um eine Schaltungsbeschädigung zu vermeiden, wenn während der Aussendung der Mobilfunknetz-Suchsignale und der GPS-Ortungsmeldesignale eine hohe Leistung am Eingang des Hochfrequenz-Vorverstärkers 24 ansteht.

Der Niederfrequenz-Verstärker 31 der Schaltung nach Figur 3 liefert sein Ausgangssignal als Auslösesignal an den Zeit-Taktgeber 4 gemäß Figur 2 als alternative Möglichkeit der Inbetriebsetzung dieses Taktgebers durch entsprechende Veranlassung der Personen oder Organisationen am Orte der Anschlüsse A und B dann, wenn eine solche Inbetriebsetzung des Zeit- und Taktgebers 4 nicht durch die hilfe- oder schutzbedürftige Person aufgrund einer Betätigung des Schalterpaares 3 vorgenommen werden kann, oder vorgenommen werden soll.

Die Außenführungsform nach Figur 4 stimmt in wesentlichen Teilen mit der Ausführungsform nach Figur 1 überein, wobei nachfolgend bezüglich solcher übereinstimmenden Teile auf eine nähere Erläuterung verzichtet wird.

Bei der Ausführungsform nach Figur 4 enthält der am Orte der hilfe- oder schutzbedürftigen Person a bzw. b befindliche Signalgeber 1 eine GPS-Empfangseinrichtung und -Auswerteinrichtung an sich bekannter Art, welche in Figur 5 mit 35 bezeichnet ist. Dieser GPS-Empfangseinrichtung und Auswerteinrichtung 35 kann eine gesonderte Antenne 36 zugeordnet sein. Es ist jedoch auch möglich, die Antenne 2 der Senderschaltung des Signalgebers 1 zu benutzen, wobei auf diesbezügliche Einzelheiten in Figur 2 hingewiesen sei.

Von der GPS-Empfangs- und Auswerteinrichtung 35 abgeleitete GPS-Ortungsdaten werden in Abwandlung gegenüber der Ausführungsform, welche anhand von Figur 2 beschrieben wurde, den Mobilfunknetz-Suchsignalen, der Information über die Rufnummer der Zentrale 7 und einem Personen-Identifizierungscode hinzugefügt und zur Modulation in den Modulationsstufen 14 bzw. 15 bzw. 16 verwendet. Die schließlich nach Frequenzvervielfachung in den Vraktor-Frequenzvervielfacherstufen 18 und nach Filterung in den jeweils zugehörigen Filtern 19 über die Antenne 2 ausgesendeten Signale erreichen je nach verwendetem Mobilfunknetzsuchsingal die Zentrale 7, in der an durch die Personenidentifizierungsinformation bestimmten Adressenplätzen die zugehörigen GPS-Ortungsdaten gespeichert und für den Abruf durch autorisierte Personen oder Organisationen selektiv bereitgehalten werden.

Soll das von der hilfe- oder schutzbedürftigen Person mitzuführende Gerät mit dem Signalgeber 1 von GPS-Satelittensignal-Auswerteinrichtungen freigehalten werden, so können in Abwandlung auch jeweils nur GPS-Entfernungsmeßdaten über das ausgewählte Mobilfunknetz an die Zentrale 7 übermittelt werden, wobei zu einer Person gehörige Entfernungsmeßdaten in Gruppen mit entsprechendem Personen-Identifizierungscode in der Zentrale 7 ausgewertet werden.

Den Ausführungsformen nach den Figuren 1 und 2 bzw. 4 und 5 ist gemeinsam, daß nach Auslösung des Zeit-Taktgliedes 4 entweder durch Betätigung des Schalterpaares 3 durch die hilfe- oder schutzbedürftige Person oder nach Fernauslösung von der Zentrale 7 aus oder von einem der Anschlüsse A oder B aus über die am One des Signalgebers 1 befindliche Empfängerschaltung (Figur 3) die Modulationsstufen 14, 15 und 16 und ggf. die Modulationsstufe 17 der Reihe nach in Betrieb gehen, so daß unabhängig vom Aufenthaltsort der hilfe- oder schutzbedürftigen Person ein verfügbares Mobilfunknetz gefunden wird und der Ordnungsbetrieb ermöglicht wird.

Bei den bisher beschriebenen und in den Zeichnungen gezeigten Ausführungsformen war im wesentlichen nur von der Übermittlung von Personen-Identifizierungdaten und von Ortungsdaten an eine Zentrale 7 die Rede. Außer den Personen-Identifizierungdaten und den Ortungsdaten können aber auch individuelle Bildinformationen und/oder Gerauschinformationen, welche für die Umgebung der betreffenden hilfe- oder schutzbedürftigen Personen Gültigkeit haben, den Personen-Identifizierungdaten und den GPS-Ortungsdaten hinzugefügt und zur Zentrale übermittelt und dort autorisiert abrufbar gespeichert werden. Solche Bildinformationen sind nicht auf unmittelbar deutbare Bilder beschränkt, sondern können auch die Form auswertbarer Bildinformationen haben, die schließlich nach der Auswertung Informationen über die Umgebung liefern, in welcher sich die betreffende hilfe- oder schutzbedürftige Person befindet. Geeignete Signalgeber können mit einer Mikrooptik und mit Bildaufnahmechips ausgerüstet sein, die sich innerhalb des Signalgebers 1 befinden. Schall- oder Geräuschinformationen werden von miniaturisierten digitalen Geräuschspeichern oder Tonsignalspeichern abgeleitet, die ebenfalls in dem Gehäuse des Signalgebers 1 untergebracht sein können.

Bei größerem Datenumfang der vom Takt- und Zeitglied 4 ausgelösten Sendetakte sind diese entsprechend länger zu wählen.

Das Gehäuse für den Signalgeber 1 ist aus einem gegen Beschädigung oder bewußte Zerstörung widerstandsfähigen Material, insbesondere aus Titan oder einer Titanlegierung oder aus einem kohlefaserverstärkten Werkstoff gefertigt. Ein inneres Abschirmgehäuse aus ferromagnetischem Werkstoff kann ein unbeabsichtigtes oder bewußtes Stören der Schaltkreise im Gehäuseinneren verhindern. Eine geeignete kapazitive Durchführung schafft die Verbindung vom Gehäuseinneren zu einer Antenne, die, wie bereits erwähnt, in eine Halskette oder einen Haarschmuck oder dergleichen integriert oder in solchen Teilen untergebracht sein kann.

In bestimmten Fällen kann es zweckmäßig sein, das Signalgebergehäuse über einen gegen Zerstörung widerstandsfähigen Armreif, Gürtel- oder Befestigungsring am Körper der hilfe- oder schutzbedüftigen Person anzubringen, wobei dieses Befestigungsmittel nur mittels eines in besonderer Weise kodierten Schlüssels geöffnet werden kann, der einer autorisierten Person oder Organisation zur Verfügung steht.

## Patentansprüche

1. Schutz- und Überwachungssystem, insbesondere für hilfe- oder schutzbedürftige Personen (a ,b), mit einem von der betreffenden Person mitgeführten Signalgeber (1), mit einem dessen Signale weiterleitenden Mobilfunknetz (6) und mit einer mit diesem Netz verbundenen Zentrale (7), in welcher die Signale des Signalgebers (1) zur Identifizierung der Person (a, b) analysierbar sind, wobei
- der von der hilfe- oder schutzbedürftigen Person (a, b) mitgeführte Signalgeber (1) einen Sender zur Abgabe eines Mobilfunknetz-Suchsignales, eines entsprechenden Anwahlsignales der Zentrale (7) und zur Abgabe von Personen-Identifizierungssignalen enthält und außerdem einem GPS-Ortungssystem zugeordnet ist; und
- in der Zentrale (7) für den Abruf durch eine autorisierte Person oder Organisation Personen-Identifizierungsdaten entsprechend den Personen-Identifizierungssignalen und Ortungsdaten entsprechend der Auswertung von GPS-Ortungssignalen gebildet und bereitgehalten werden,
**dadurch gekennzeichnet, daß**
- der Sender des von der hilfe- oder schutzbedürftigen Personen (a, b) mitgeführten Signalgebers (1) zur Abgabe unterschiedlicher Mobilfunknetz-Suchsignale entsprechend mehreren möglicherweise verfügbaren Mobilfunknetzen in zyklischer Folge ausgebildet ist.

2. System nach Anspruch 1, **dadurch gekennzeichnet, daß** die Zuordnung eines GPS-Ortungssystems zum Sender des Signalgebers (1) in einer Parallelschaltung eines GPS-Ortungsmeldesignal-Sendekanales (22, 17, 18, 19) zur Aussendung eines mit einer Personen-Identifizierungsinformation versehenen GPS-Ortungsmeldesignales zu mindestens einem weiteren Sendekanal (z.B. 14, 18, 19) besteht, über den das mindestens eine Mobilfunknetzsuchsignal, das entsprechende Anwahlsignal der Zentrale (7) und Personen-Identifizierungssignale ausgesendet werden, und daß die GPS-Ortungsmeldesignale über die Satelliten zur Auswertung an die Zentrale (7) übertragbar sind.

3. System nach Anspruch 1, **dadurch gekennzeichnet, daß** dem Signalgeber (1) ein Empfänger zum Empfang von GPS-Satellitensignalen zugeordnet ist, und daß der Sender des Signalgebers (1) auch von den GPS-Satellitensignalen abgeleitete Entfernungsdaten zur Positions-Auswertung in der Zentrale (7), oder aus den GPS-Satellitensignalen am Ort des Signalgebers (1) in einer Auswerteinrichtung gebildete Positionsdaten an das Mobilfunknetz (6) zur Übertragung zur Zentrale (7) sendet.

4. System nach einem der Ansprüche 1 bis 3, **dadurch gekennzeichnet, daß** der von der hilfe- oder schutzbedürftige Person mitgeführte Signalgeber (1) von einem internen Taktgeber (4) jeweils für bestimmte Takt-Zeitintervalle betätigt wird.

5. System nach einem der Ansprüche 1 bis 4, **dadurch gekennzeichnet, daß** der von der hilfs- oder schutzbedürftigen Person (a, b) mitgeführte Signalgeber (1) mittels eines von der betreffenden Person erzeugten Schaltimpulses (3) im Bedarfs- oder Notfall in Betrieb setzbar ist.

6. System nach einem der Ansprüche 1 bis 4, **dadurch gekennzeichnet, daß** der von der hilfe- oder schutzbedürftigen Person (a, b) mitgeführte Signalgeber (1) mittels eines in der Zentrale (7) erzeugten oder über das Mobilfunknetz (6) übertragenen Fernsteuersignals in Betrieb setzbar ( Figur 3) ist .

7. System nach einem der Ansprüche 4 bis 6, **dadurch gekennzeichnet, daß** in der Zentrale (7) die Personen-Identifizierungsdaten, und die von den GPS-Satellitensignalen abgeleiteten Positionsdaten über eine Reihe von Takt-Zeitintervallen als Historie speicherbar und von dort abrufbar sind.

8. System nach einem der Ansprüche 1 bis 7, **dadurch gekennzeichnet daß** vom jeweiligen Signalgeber (1) ausgesendete Signale auch zu Peilempfängern (11) zur Bildung einer Feinstpeilung des Ortes des Signalgebers (1) übertragbar sind, wobei die Peilempfänger entweder mobil oder am Orte der Basisstationen (5) des mindestens einen Mobilfunknetzes installiert sind.

9. System nach Anspruch 8 und/oder Anspruch 7, **dadurch gekennzeichnet daß** in der Zentrale (7) zwischen Positionsdaten des GPS-Systems aus benachbarten Takt-Zeitintervallen eine Differenzbildung vornehmbar ist und eine Alarmauslösung, etwa bei einer autorisierten Person oder Organisation oder am Ort der Zentrale (7) erfolgt, wenn die Differenz einen Schwellwert übersteigt.

10. System nach einem der Ansprüche 1 bis 9, **dadurch gekennzeichnet, daß** der von der hilfe-, oder schutzbedürftigen Person mitgeführte Signalgeber (1) Bildaufnahmeeinrichtungen und/oder Schallaufnahmeeinrichtungen enthält, deren Signale über das jeweilige Mobilfunknetz zur Zentrale (7) übertragbar und dort autorisiert abrufbar sind.

11. System nach einem der Ansprüche 1 bis 10, **dadurch gekennzeichnet, daß** der von der hilfe- oder schutzbedrüftigen Person mitgeführte Signalgeber (1) in einem gegen beabsichtigte oder unbeabsichtigte Zerstörung widerstandsfähigen Gehäuse aus Titan oder aus einer Titanlegierung oder aus einem Kohlefaserverstärkten Werkstoff untergebracht ist.

12. System nach Anspruch 11, **dadurch gekennzeichnet, daß** das Gehäuse mittels eines gegen beabsichtigte oder unbeabsichtigte Zerstörung widerstandsfähigen Befestigungsorgan und einen mittels eines kodierten Schlüssel betätigten Schließorganes am Körper der hilfe- oder schutzbedürftigen Person anbringbar ist.

## Claims

1. Protection and surveillance system, especially for people (a, b) requiring assistance or protection, which has a signal generator (1) carried by the person concerned, a mobile radio network (6) passing on the signals from said generator, and a central office (7) connected to this network and in which the signals of the signal generator (1) can be analysed to identify the person (a, b), wherein
- the signal generator (1) carried by the person (a, b) requiring assistance or protection contains a transmitter for transmitting a mobile radio network search signal and a corresponding central office (7) selection signal, and for transmitting personal identification signals, and is moreover associated with a GPS locating system; and
- in the central office (7), personal identification data corresponding to the personal identification signals and locating data are formed in accordance with the evaluation of GPS locating signals and held ready for retrieval by an authorised person or organisation,
**characterised in that**
- the transmitter of the signal generator (1) carried by the people (a, b) requiring assistance or protection is configured to transmit different mobile radio network search signals in cyclical succession corresponding to a plurality of possibly available mobile radio networks.

2. System according to claim 1, **characterised in that** the allocation of a GPS locating system to the transmitter of the signal generator (1) comprises a parallel connection of a GPS locating message signal transmitting channel (22, 17, 18, 19) for transmitting a GPS locating message signal, provided with personal identification information, to at least one further transmitting channel (e.g. 14, 18, 19), via which the at least one mobile radio network search signal, the corresponding central office (7) selection signal and personal identification signals are transmitted, and **in that** the GPS locating message signals can be transmitted via the satellites to' the central office (7) for evaluation.

3. System according to claim 1, **characterised in that** a receiver for receiving GPS satellite signals is associated with the signal generator (1), and **in that** the transmitter of the signal generator (1) also transmits distance data derived from the GPS satellite signals for position evaluation in the central office (7), or transmits position data, formed in an evaluation unit from the GPS satellite signals at the location of the signal generator (1), to the mobile radio network (6) for transmission to the central office (7).

4. System according to one of claims 1 to 3, **characterised in that** the signal generator (1) carried by the person requiring assistance or protection is actuated by an internal clock pulse generator (4), in each case for specific clock time intervals.

5. System according to one of claims 1 to 4, **characterised in that** the signal generator (1) carried by the person (a, b) requiring assistance or protection can be started up, when required or in an emergency, by means of a switching pulse (3) generated by the person concerned.

6. System according to one of claims 1 to 4, **characterised in that** the signal generator (1) carried by the person (a, b) requiring assistance or protection can be started up (Fig. 3) by means of a remote control signal generated in the central office (7) or transmitted via the mobile radio network (6).

7. System according to one of claims 4 to 6, **characterised in that** the personal identification data and the position data derived from the GPS satellite signals over a series of clock time intervals can be stored as history in the central office (7) and retrieved from there.

8. System according to one of claims 1 to 7, **characterised in that** signals transmitted by the respective signal generator (1) can also be transmitted to position finders (11) to form a most exact detection of the location of the signal generator (1), the position finders being either mobile or installed at the location of the base stations (5) of the at least one mobile radio network.

9. System according to claim 8 and/or claim 7, **characterised in that** in the central office (7), differences can be calculated between position data of the GPS system from adjacent clock time intervals and an alarm is triggered, for instance with an authorised person or organisation or at the location of the central office (7) when the difference exceeds a threshold value.

10. System according to one of claims 1 to 9, **characterised in that** the signal generator (1) carried by the person requiring assistance or protection contains image- and sound-recording devices, the signals from which can be transmitted via the respective mobile radio network to the central office (7) and retrieved there in an authorised manner.

11. System according to one of claims 1 to 10, **characterised in that** the signal generator (1) carried by the person requiring assistance or protection is accommodated in a housing which is resistant to intentional or unintentional destruction and is formed from titanium or a titanium alloy or from a carbon-fibre-reinforced material.

12. System according to claim 11, **characterised in that** the housing can be attached to the body of the person requiring assistance or protection by means of a fastening member which is resistant to intentional or unintentional destruction, and by means of a locking member actuated by a coded key.

## Revendications

1. Système de protection et de surveillance en particulier pour personnes nécessitant une aide ou une protection (a, b), comprenant un transmetteur de signaux (1) porté par la personne concernée, un réseau mobile (6) transmettant les signaux dudit transmetteur ainsi qu'une centrale (7) connectée audit réseau et dans laquelle les signaux du transmetteur de signaux (1) peuvent être analysés pour identifier la personne (a, b),
- le transmetteur de signaux (1) porté par la personne nécessitant une aide ou une protection (a, b) comprenant un émetteur qui délivre un signal de recherche du réseau mobile ainsi qu'un signal d'appel correspondant de la centrale (7) et qui délivre également des signaux d'identification de personnes, ledit transmetteur de signaux étant en outre associé à un système de repérage GPS ; et
- des données d'identification de personnes étant constituées, dans la centrale (7), pour être appelées par une personne ou une organisation autorisée, conformément aux signaux d'identification de personnes et aux données de repérage conformément à l'analyse de signaux de repérage GPS, lesdites données étant maintenues à disposition,
**caractérisé en ce que**
- l'émetteur du transmetteur de signaux (1) porté par la personne nécessitant une aide ou une protection (a, b) est réalisé de manière à délivrer cycliquement différents signaux de recherche de réseau mobile selon plusieurs réseaux mobiles potentiellement disponibles.

2. Système selon la revendication 1, **caractérisé en ce que** l'association, à l'émetteur du transmetteur de signaux (1), d'un système de repérage GPS consiste dans un montage en parallèle d'un canal d'émission de signaux de message de repérage GPS (22, 17, 18, 19) émettant un signal de message de repérage GPS, auquel est adjointe une information d'identification de personnes, à au moins un autre canal d'émission (14, 18, 19, par exemple), via l'au moins un signal de recherche de réseau mobile, le signal d'appel de la centrale (7) correspondant et des signaux d'identification de personnes sont émis et **en ce que** les signaux de message de repérage GPS sont transmissibles, à des fins d'analyse, à la centrale (7) via satellites.

3. Système selon la revendication 1, **caractérisé en ce qu'**au transmetteur de signaux (1) est associé un récepteur pour la réception de signaux satellites GPS et **en ce que** l'émetteur du transmetteur de signaux (1) émet également des données concernant les distances et dérivées des signaux satellites GPS aux fins de l'analyse de position dans la centrale (7) ou émet au réseau mobile (6), aux fins de la transmission à la centrale (7), des données de position constituées dans un dispositif d'analyse sur la base des signaux satellites GPS à l'emplacement du transmetteur de signaux (1).

4. Système selon l'une des revendications 1 à 3, **caractérisé en ce que** le transmetteur de signaux (1) porté par la personne nécessitant une aide ou une protection (a, b) est actionné par un générateur de rythme interne (4) à chaque fois pour certaines périodes du rythme.

5. Système selon l'une des revendications 1 à 4, **caractérisé en ce qu'**en cas de besoin ou en cas d'urgence le transmetteur de signaux (1) porté par la personne nécessitant une aide ou une protection (a, b) peut être mis en marche par une impulsion de commande (3) générée par la personne concernée.

6. Système selon l'une des revendications 1 à 4, **caractérisé en ce que** le transmetteur de signaux (1) porté par la personne nécessitant une aide ou une protection (a, b) peut être mis en marche (figure 3) au moyen d'un signal de télécommande généré dans la centrale (7) ou transmis via le réseau mobile (6).

7. Système selon l'une des revendications 4 à 6, **caractérisé en ce que** les données d'identification de personnes et les données de position dérivées des signaux satellites GPS peuvent être mises en mémoire dans la centrale (7) par l'intermédiaire de périodes de rythme sous la forme d'un historique et qu'elle peuvent être appelées au départ de ladite centrale.

8. Système selon l'une des revendications 1 à 7, **caractérisé en ce que** des signaux émis par chaque transmetteur de signaux (1) sont également transmissibles à des radiogoniomètres (11) pour former un repérage ultra-précis de la position dudit transmetteur de signaux (1), les radiogoniomètres étant soit mobiles soit installés à l'endroit où se trouvent les stations de base (5) de l'au moins un réseau mobile.

9. Système selon la revendication 8 et/ou la revendication 7, **caractérisé en ce que**, dans la centrale (7), il est possible d'établir une différence entre des données de position du système GPS sur la base de périodes de rythme voisines et **en ce qu'**une alarme est déclenchée, par exemple chez une personne ou auprès d'une organisation autorisée ou à l'endroit où se trouve la centrale (7), lorsque la différence dépasse une valeur seuil.

10. Système selon l'une des revendications 1 à 9, **caractérisé en ce que** le transmetteur de signaux (1) porté par la personne nécessitant une aide ou une protection (a, b) comprend des dispositifs de prise de vue et/ou des dispositifs de prise de son dont les signaux sont transmissibles, via le réseau mobile correspondant, à la centrale (7) dont ils peuvent être appelés moyennant une autorisation.

11. Système selon l'une des revendications 1 à 10, **caractérisé en ce que** le transmetteur de signaux (1) porté par la personne nécessitant une aide ou une protection (a, b) est placé dans un boîtier réalisé en titane ou en un alliage de titane ou en un matériau renforcé en fibres de carbone à l'épreuve de toute destruction intentionnelle ou accidentelle.

12. Système selon la revendication 11, **caractérisé en ce que** le boîtier peut être placé sur le corps de la personne nécessitant une aide ou une protection, au moyen d'un organe de fixation à l'épreuve de toute destruction intentionnelle ou accidentelle et d'un organe de fermeture actionné à l'aide d'une clé codée.
